# EUROPEAN PATENT SPECIFICATION

(11) **EP 4 348 096 B1**
(45) Date of publication and mention of the grant of the patent: **02.04.2025**
(21) Application number: 21731720.5
(22) Date of filing: 04.06.2021
(51) Int. Cl.: F17C 6/00, F17C 3/02

(54) **ARRANGEMENT AND METHOD IN LIQUID HYDROGEN FUEL SUPPLY SYSTEM**
ANORDNUNG UND VERFAHREN IN EINEM FLÜSSIGWASSERSTOFFBRENNSTOFFVERSORGUNGSSYSTEM
AGENCEMENT ET PROCÉDÉ DANS UN SYSTÈME D'ALIMENTATION EN CARBURANT HYDROGÈNE LIQUIDE

(43) Date of publication of application: 10.04.2024
(73) Proprietor: Wärtsilä Finland Oy, 65100 Vaasa (FI)
(72) Inventor: SCOCCHI, Alessandro, 34018 Trieste (IT); ZOGLIA, Piero, 34018 Trieste (IT)
(74) Representative: Genip Oy
(86) International application number: PCT/EP2021/064970
(87) International publication number: WO 2022/253441

(56) References cited:
- EP-B1- 2 212 186
- WO-A2-2019/038364
- US-A1- 2006 162 811

## Description

### Technical field

The present invention relates to a fuel tank arrangement in a liquid hydrogen fuel supply system according to the preamble of claim 1. The present invention relates also to a method in filling a liquid hydrogen fuel supply system according to the preamble of claim 9.

More specifically the present invention relates to a fuel tank arrangement in a liquid hydrogen fuel supply system for storing and providing hydrogen for a gas consumer, the system comprising:
- an inlet line for providing fuel into a tank,
- the inlet line having a first valve in the first end and a second valve in the tank end,
- the inlet line is provided with an inert gas flush media line, the first end of which is connected to the inlet line downstream of the first valve, and a second end of which is controllably connected to a source of inert gas for performing an inert gas flushing of the inlet line.

More specifically the method of present invention relates to a method in filling a liquid hydrogen fuel supply system for storing and providing liquid hydrogen for a gas consumer, the method comprising steps of:
- feeding a predetermined amount of liquid hydrogen via an inlet line from a bunkering station to a tank, the inlet line having a first valve in the first end and a second valve in the tank end, and after said feeding closing the first valve,
- inerting the inlet line by supplying an inert gas via an inert gas flush media line controllably connected to the inlet line downstream of the first valve, the supplied inert gas flushing the hydrogen away from the inlet line into the tank.

### Background art

Natural gas as a fuel for internal combustion engines in marine vessels, power plants and such, has become more common because of the environmental reasons since the combustion results are less harmful than for example those resulted in combustion of heavy or light fuel oil. However, also gaseous fossil fuels are generally harmful to the environment and therefore any leakage to the atmosphere is undesired. That is why all equipment for handling and regulating gas fuel is subjected to stringent safety regulations. In a transformation from fossil fuels to renewable fuels one possible next step is hydrogen. The same or even more demanding regulations apply if the gaseous fuel is hydrogen because it has lower boiling temperature than the liquified natural gas (LNG). Hydrogen has also small molecular size making it prone to leak.

Hydrogen is one of the most potential alternative fuels for future needs. Hydrogen can be used in a mixture of fuels in an internal combustion piston engine. For example, with LNG it can be used up to a certain share of the total fuel mixture. Alternatively, hydrogen can be used as the only fuel for a fuel cell. A fuel cell is an electrochemical cell that converts the chemical energy of a fuel, such as hydrogen and an oxidizing agent into electricity through a pair of redox reactions. Fuel cell systems are different from most batteries in requiring a continuous source of fuel and oxygen to sustain the chemical reaction. In that sense the requirements of hydrogen based power systems are closer to the LNG-fuel systems than a battery-based system.

However, for various reasons both the tank and the tank connection space used for storing and handling liquid hydrogen require specific attention. Firstly, hydrogen storage and processing in general imply high risk of fire and explosion due to, on the one hand, the wide range of mixture giving explosive atmosphere and, on the other hand, the low ignition energy typical to hydrogen. Secondly, the detection of hydrogen is relatively slow.

For reference, in publication WO 2020/182308 A1 it is presented a fuel tank arrangement of a marine vessel, the tank arrangement comprising a liquid hydrogen fuel tank, a tank connection space arranged in communication with the liquid hydrogen fuel tank, the tank connection space being provided with a vent mast having a lower end and an upper end, and an interior, the interior of the vent mast forming a ventilation outlet line for discharging gas from the tank connection space, an emergency pressure relief valve coupled via a safety valve line to the gas space of the fuel tank, wherein a first hydrogen outlet line provided in the vent mast is separate from the ventilation outlet line, the first hydrogen outlet line extending from the lower end of the vent mast to the upper end thereof and being arranged in flow communication with the emergency pressure relief valve.

In publication EP 2212186 B1 it is presented a method for operating a LNG fuelled marine vessel, which marine vessel comprises a bunker station comprising an inlet pipe to which a source of LNG is arranged to be connected, a LNG storage tank connected to the bunker station and a LNG fuelled power plant, in which method in connection with a bunkering operation the marine vessel is supplied with LNG by connecting the source of LNG to a bunkering line of the marine vessel through the inlet pipe of the bunker station and subsequently supplying LNG to the LNG storage tank through the bunkering line. The bunkering line is cooled down to a temperature level corresponding to the temperature level of the LNG by re-circulating LNG from a lower part of the LNG storage tank to the bunkering line and back to the LNG storage tank by way of the bunkering line before the marine vessel arrives at a bunkering facility.

A basic configuration for fuel supply for a hydrogen based power generating system would be that the fuel consumption units (such as a number of interconnected fuel cells) are connected to a tank that can be filled from outside. The system can be for example in a marine application where the fuel cells are the power source for a marine vessel, the tank is in the vessel and the fuel filling system is in a harbour or in a truck or in a bunkering system. It may also be that the fuel consumption units are arranged to form a land-based power plant and the fuel is delivered by trucks or trains to the power plant. The same principle can even be applied to normal passenger cars, busses or cargo trucks.

One of aspects that needs to be taken in to account is the very low boiling temperature of liquified gaseous fuels. With LNG that is -163 °C and that affects in design of the LNG fuel supply system. As normal atmosphere temperatures are significantly above the boiling temperature of LNG and meaning that the liquid fuel would boil and transit to gas phase very quickly when in connection with any non-cryogenic components such as fuel supply system parts, pipes, valves, etc. in atmosphere temperature. For economical and practical reasons the cryogenic conditions are limited to the minimum, such as to the tank and to the proximity of the tank, such as to a tank connection space. The tank is surrounded by valves so that any connection such as a fuel supply line to or from the tank is equipped with a valve. After filling up the tank it is a mandatory practice to make the fuel supply system inert. These fuel supply systems may be especially long in case of marine vessels, where the fuel supply pipeline can be tens or even hundreds of meters. In case of LNG this inerting is done with nitrogen. The nitrogen gas phase temperatures are suitable for the purpose, because nitrogen is condensing at -196 C and freezing at -210 C. This means that nitrogen remains in gas phase if it is supplied to the pipeline after LNG. However, the same method and substance cannot be applied to the hydrogen fuel supply system. One of the key differences between liquid hydrogen and LNG is the boiling temperature of the liquid, and with hydrogen it is -252,87 °C. This means that if nitrogen would be fed to the pipeline after liquified hydrogen, it would condensate or even freeze to the pipelines and most likely start causing problems.

An object of the invention is to provide an arrangement in a liquid hydrogen fuel supply system connectable to a bunkering station for providing the liquid hydrogen to the system. Another object of the invention is to provide a method in a liquid hydrogen fuel supply system connectable to a bunkering station for providing the liquid hydrogen to the system. In both arrangement and in method the performance is considerably improved compared to the prior art solutions.

### Disclosure of the Invention

Objects of the invention can be met substantially as is disclosed in the independent claims and in the other claims describing more details of different embodiments of the invention.

According to an embodiment of the invention it is provided a fuel tank arrangement in a liquid hydrogen fuel supply system for storing and providing hydrogen for a gas consumer, the system comprising:
- an inlet line for providing fuel into a tank,
- the inlet line having a first valve in the first end and a second valve in the tank end,
- the inlet line is provided with an inert gas flush media line, the first end of which is connected to the inlet line downstream of the first valve, and a second end of which is controllably connected to a source of inert gas for performing an inert gas flushing of the inlet line,
the system further comprises:
- the inlet line being provided with a fuel gas flush media line, the first end of which is controllably connected to the inlet line downstream of the first valve, and a second end of which is connected to a source of gaseous hydrogen, for feeding gaseous hydrogen to the inlet line for performing a first flushing of the inlet line.

This provides an arrangement in which performance is considerably improved and the inerting operation can be done efficiently and safely. It requires a special arrangement of components suitable for these very demanding low temperature cryogenic conditions. However, the arrangement utilizes to large extent features that are already required for other purposes and the additional elements are relatively small in number.

According to an embodiment the arrangement is utilized by a method in filling a liquid hydrogen fuel supply system for storing and providing liquid hydrogen for a gas consumer, the method comprising steps of:
- feeding a predetermined amount of liquid hydrogen via an inlet line from a bunkering station connection to a tank, the inlet line having a first valve in the first end and a second valve in the tank end, and after said feeding closing the first valve,
- inerting the inlet line by supplying an inert gas via an inert gas flush media line controllably connected to the inlet line downstream of the first valve, the supplied inert gas flushing the hydrogen away from the inlet line into the tank,
- between the feeding step and the inerting step a fuel gas flushing step is performed wherein gaseous hydrogen being supplied from a source of gaseous hydrogen to the inlet line via a fuel gas flush media line connected to the inlet line downstream of the first valve, the gaseous hydrogen flushing the inlet line and simultaneously warming up the inlet line.

According to an embodiment of the invention the source of gaseous hydrogen is a device for increasing pressure and temperature of gaseous hydrogen and it is connected to or supplied by gaseous or liquid hydrogen in the tank. Thus, the same fuel that has been filled for consumption is the media for flushing and it is first taken from the tank to a device for increasing the pressure and the temperature and then lead for flushing and warming up the inlet line. The flushing gas may be taken from the gas space of the tank. A part of the liquid hydrogen in the tank evaporates and forms so called boil off gas. This is already in the gas phase and a step for vaporising the liquid to gas phase can be avoided. In the flushing operation the warmed gas will be returned to the tank again. Using evaporated and heated liquid hydrogen for the fuel gas flushing operation, and re-introducing it as gas into the tank, increases pressure in the tank more than using heated boil off gas from the tank for the flushing operation. Thus, using boil off gas and then just re-introducing heated gas into the tank is more economical alternative, since the step of evaporating liquid hydrogen is avoided. However, for flushing the pressure of the flushing gas needs to be raised anyway by suitable means. Otherwise, the pressure in both inlet line and in the fuel gas flush media line would be the same and no flushing would happen.

There are a couple of alternatives for the pressure and temperature increase of hydrogen and the used heater/evaporator for the flushing operation. One is that the source of gaseous hydrogen is a main gas evaporator of the tank arrangement using tank boil off gas or liquid phase hydrogen. The main gas evaporator is used for evaporating and heating liquid gas for in normal operation when fuel from the tank arrangement is used by a gas consumer. Other alternative is that the source of pressurized gaseous hydrogen is a pressure build-up evaporator. The pressure build-up evaporator is used in a pressurized tank arrangement, which is an option for a pump operated tank arrangement, for increasing and maintaining sufficient pressure in the tank for a gas consumer in operation. Still other possible source of hydrogen for the flushing operation is a pressure increase device, being a pump, pressure accumulator or similar. This choice source of gaseous hydrogen depends on the actual configuration of the system, many configurations are possible.

According to an embodiment of the method the inlet line safety procedure is two step procedure. First the fuel gas flush pushes any remaining liquid hydrogen to the tank and evaporates possible small residuals of liquid hydrogen and warms up the inlet line. The next step is the inert gas flush that replaces the fuel gas in the inlet line by pushing it to the tank. For both steps suitable flush volumes and pressures are selected by the actual configuration, by inlet line diameter and length. The flush pressure and flow velocity need to be adequate to move the media in front of the flush media.

According to an embodiment of the invention the inlet line is provided with a temperature sensor (or a number of sensors) for determining the temperature of the inlet line. This feature enables the temperature monitoring of the inlet line. For the fuel gas flushing an amount of liquid hydrogen has been boiled off or is evaporated to gas phase and warmed up to a predetermined temperature above Tn, wherein Tn is the condensing temperature of the inert gas. During fuel gas flush the temperature of the inlet line is being monitored and after the temperature of the inlet line is determined to be above Tn, the fuel gas flush media line is closed and the flushing with the inert gas can be initiated. It is useful for an operator to know if the inlet line temperature is so low that the inert gas would condensate or freeze. In other words, the fuel gas flushing is advantageously continued until the inlet line temperature has risen first above the freezing temperature of the inert gas and then above the condensing temperature of the inert gas. Only after that it is safe to lead the inert gas to the inlet line and flush it to inert condition, to make the inlet line being without of danger of containing inflammable or explosive amount of fuel residuals. The completion of inert gas flush may be determined for example by measuring the concentration of the inert gas in the tank end of the inlet line. Completion of the inerting phase can also be confirmed by considering that a certain amount of volume exchanges has been done, e.g. the amount of nitrogen used for flushing is for example 5 times the volume of inlet line, meaning that sufficient flushing is done and the line can be considered inerted. Most suitably the inert gas is nitrogen because it is cheaper than other inert gases, so operational costs for the power generating system operator are kept low. Some other alternatives such as argon or helium may also be considered.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims.

### Brief Description of Drawings

In the following, the invention will be described with reference to the accompanying exemplary, schematic drawings, in which
Figure 1 illustrates a fuel supply system according to an embodiment of the invention,
Figure 2 illustrates another fuel supply system according to another embodiment of the invention.

### Detailed Description of Drawings

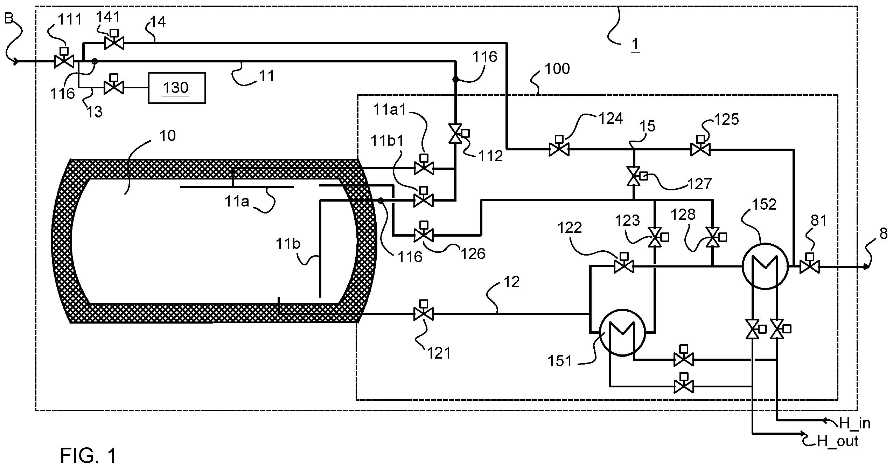

Figure 1 depicts schematically a fuel tank arrangement in a liquid hydrogen fuel supply system 1 for storing and providing hydrogen for a gas consumer 8, the system comprising:
- an inlet line 11 for providing fuel into a tank 10,
- the inlet line 11 having a first valve 111 in the first end and a second valve 112 in the tank end,
- the inlet line 11 is provided with an inert gas flush media line 13, the first end of which is connected to the inlet line 11 downstream of the first valve 111, and a second end of which is controllably connected to a source of inert gas 130 for performing an inert gas flushing of the inlet line 11,
- the system further comprises:
   - the inlet line 11 being provided with a fuel gas flush media line 14, the first end of which is controllably connected to the inlet line 11 downstream of the first valve 111,
and a second end of which is connected to a source of gaseous hydrogen 15, for feeding gaseous hydrogen to the inlet line 11 for performing a first flushing of the inlet line 11.

According to an embodiment the arrangement is utilized by a method in filling a liquid hydrogen fuel supply system 1 for storing and providing liquid hydrogen for a gas consumer 8, the method comprising steps of:
- feeding a predetermined amount of liquid hydrogen from a bunkering station (not shown), connected to a bunkering connection B, via an inlet line 11 to a tank 10, the inlet line 11 having a first valve 111 in the first end and a second valve 112 in the tank end, and after said feeding closing the first valve 111,
- inerting the inlet line 11 by supplying an inert gas via an inert gas flush media line 13 controllably connected to the inlet line 11 downstream of the first valve 111, the supplied inert gas flushing the hydrogen away from the inlet line 11 into the tank 10,
- between the feeding step and the inerting step a fuel gas flushing step is performed wherein gaseous hydrogen being supplied from a source of gaseous hydrogen 15 to the inlet line 11 via a fuel gas flush media line 14 connected to the inlet line11 downstream of the first valve 11, the gaseous hydrogen flushing the inlet line 11 and simultaneously warming up the inlet line 11.

In Fig. 1 the liquid hydrogen fuel supply system 1 is arranged so that the source of gaseous hydrogen 15 is a device for increasing pressure and temperature of gaseous hydrogen and it is connected to or supplied by gaseous or liquid hydrogen in the tank 10. Concerning the source of gaseous hydrogen 15, the numeral 15 refers schematically in Fig 1 to an initial spot in the fuel gas flush line 14 where the actual devices outlet may be connected. As in Fig 1, the numeral 15 points to an intersection where both options, a main gas evaporator 151 or a pressure built-up evaporator 152 that evaporates an amount of hydrogen may be selectably connected. With said evaporator devices an amount of liquid hydrogen is evaporated to gas phase and warmed up (or only warmed up if the hydrogen is already in gas phase) to a predetermined temperature above Tn**,** wherein Tn is the condensing temperature of the inert gas. Evaporation and subsequent heating can be powered for example by a source of external heat, such as the gas consumer cooling system, as illustrated in Fig. 1 with references for the heating fluid heat in (H_in) and heat out (H_out). It is also possible to use electric heating for this purpose. An electric heater may be integrated into the evaporator providing heat there directly, or into the heating fluid circuit providing additional heating into the fluid before it enters the evaporator. Hereby the added electric heater solves a problem that sufficient heat may not be available in the heating fluid at the moment a bunkering operation is completed, and the fuel line should be flushed and inerted.

In fuel gas flushing step warm gaseous hydrogen is supplied to the inlet line 11 downstream of the first valve 111, the gaseous hydrogen is flushing the inlet line 11 and simultaneously warming up the inlet line 11. The fuel gas flush pushes any remaining liquid hydrogen in the inlet line 11 to the tank 10 and evaporates possible small residuals of liquid hydrogen. An operator of the system can select the inlet line 11 end to a gas space 11a or liquid space 11b by opening and closing suitable valves 11a1 and 11b1. For fuel gas flushing it is relevant that the portion of pipe between valve 111 and valve 112 is flushed, to push the remaining liquid hydrogen in the inlet line 11 to the tank 10. It is suggested to open only valve 11a1, because the media to be flushed consist of hydrogen both in liquid phase and in gas phase. It is not convenient to do this flushing leading to the liquid part in the tank 11b, but rather to flush towards the line leading to the gaseous part of the tank 11a. In the end of this step the inlet line temperature is above condensing temperature (Tn) of the inert gas and it is filled with fuel gas, gaseous hydrogen. The inlet line 11 is provided with a temperature sensor 116 or a number of temperature sensors along the inlet line 11 for determining the temperature of the inlet line 11. Advantageously also the fuel gas flush line 14 is equipped with a temperature sensor 116. With the temperature information it is possible to determine the status of the inlet line 11 if it is in safe condition and ready for the next process step being the inert gas flushing. When the temperature of the inlet line 11 is being monitored and after the temperature of the inlet line 11 is determined to be above Tn, the fuel gas flush media line 14 is closed and the flushing with the inert gas can be initiated.

In the inert gas flush the inlet line 11 is supplied with an inert gas via an inert gas flush media line 13 controllably connected to the inlet line 11 downstream of the first valve 111, the supplied inert gas flushing the hydrogen away from the inlet line 11 into the tank 10. Here the inert gas flush replaces the fuel gas in the inlet line 11 by pushing it to the tank 10. Therefore, the pressure and flow rate of the inert gas need to be selected so that the flushing may happen.

In Fig 1. It is presented one embodiment of liquid hydrogen fuel supply system 1 for storing and providing hydrogen for a gas consumer 8. During normal operation of the system gas is provided from the insulated tank 10 via outlet line 12 to one of the evaporators, either to the pressure build-up evaporator 151 and back to the tank 10, or the main gas evaporator 152 and then further to the gas consumer 8 such as an engine, fuel cell, etc.. The pressure build-up evaporator is used for evaporating liquefied gas and feeding it back to the tank in order to maintain a pressure in the tank that is sufficiently high for the system operation. The pressure build-up evaporator is in operation based on need for increasing the pressure in the tank.

In the system according to Fig 1 the generation of the fuel flush gas can be made in several ways, here described with no particular preference order. A first option is to use the pressure build-up evaporator. According to this option, the outlet line 12 valve 121 from the tank 10 is opened, and valve 122 for the line leading to the main gas evaporator 152 is closed. Heating fluid is arranged to flow through the pressure build-up evaporator 151. Valves 123 and 127 are open enabling circulation through the pressure build-up evaporator 151, which evaporates the liquid hydrogen. Valves 128, 125 and 126 being closed, and valves 124 and 141 open, the evaporated gas flows to the fuel gas flush media line 14. With valves 141 and 112 open, and valve 111 closed, the fuel flush gas flushes the inlet line 11 towards the tank. A second option is to use the main gas evaporator 152 with liquid hydrogen from the tank 10. As a difference to option 1, valve 122 for the line leading to the main gas evaporator 152 is opened, while valve 123 enabling circulation through the pressure build-up evaporator 151 is closed. Heating fluid is now arranged to flow through the main gas evaporator 152. With valve 81 leading to gas consumers 8 closed, and valves 125 and 124 open and 127 closed, the fuel flush gas is generated to be led to line 11 the same way as in option 1. A third option is to use gaseous hydrogen, so called boil off gas from the tank 10. By opening valves 126 and 128, closing valves 121, 123 and 127, gaseous hydrogen is led to the main gas evaporator 152 for pressure and temperature increase. With valve 81 leading to gas consumers 8 closed, and valves 125 and 124 open and 127 closed, the fuel flush gas is generated to be led to line 11 the same way as in option 1 and option 2.

For a person skilled in the art, it is clear that in some case in the embodiment of Fig 1, both the build-up evaporator 151 and main gas evaporator 152 could be used as parallel evaporators for generating the fuel flush gas.

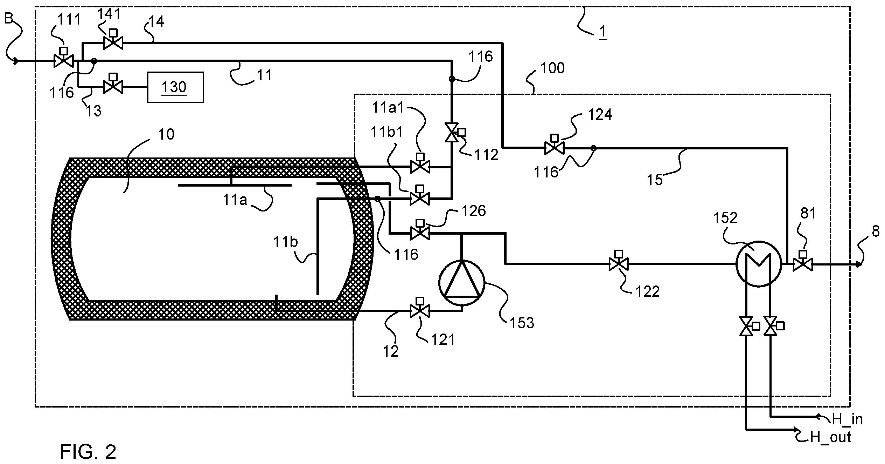

The fuel tank arrangement in Fig. 1 is provided with a tank connection space 100 for comparting connections to and from the tank 10. The fuel supply system is equipped with a number of control valves 121, 122, 123, 124, 125, 126, 127, 128, 81 shown with standard symbol for valves in Figures 1 and 2. A person familiar with the art should understand which valve need to be closed and which valve need to be open or regulated to perform the function of the system.

In Fig. 2 it is presented a fuel tank arrangement in a liquid hydrogen fuel supply system 1 for storing and providing hydrogen for a gas consumer 8, the system comprising:
- an inlet line 11 for providing fuel into a tank 10,
- the inlet line 11 having a first valve 111 in the first end and a second valve 112 in the tank end,
- the inlet line 11 is provided with an inert gas flush media line 13, the first end of which is connected to the inlet line 11 downstream of the first valve 111, and a second end of which is controllably connected to a source of inert gas 130 for performing an inert gas flushing of the inlet line 11,
- the inlet line 11 being provided with a fuel gas flush media line 14, the first end of which is controllably connected to the inlet line 11 downstream of the first valve 111,
and a second end of which is connected to a source of gaseous hydrogen 15, for feeding gaseous hydrogen to the inlet line 11 for performing a first flushing of the inlet line 11. This embodiment of the system 1 differs from what has been explained above on Fig. 1 so that the fuel supply system 1 utilizes a fuel pump 153 for pressuring up the fuel for the main gas evaporator 152 and therefore the piping is slightly different compared to Fig. 1 because the pressure build-up evaporator is missing. Otherwise, the features and function remain the same as has been explained above in connection with Fig. 1.

In the system according to Fig 2 the generation of the fuel flush gas can be made in a following way. First the outlet line 12 valve 121 from the tank 10 is opened, a valve 126 closed and the fuel pump 153 is utilized to lead the fuel towards opened valve 122 and to the line leading to the main gas evaporator 152. Heating fluid is arranged to flow through the main gas evaporator 152, which evaporates and heats the liquid hydrogen. Valve 81 leading to gas consumers 8 being closed, and valves 124 and 141 open, the evaporated gas flows to the fuel gas flush media line 14. With valves 141 and 112 open, and valve 111 closed, the fuel flush gas flushes the inlet line 11 towards the tank 10. Also with the embodiment of Fig 2 it is possible to use boil off gas from the tank. Then the valves 126 and 122 are open while valve 121 is closed, no fuel pump 153 is utilized. Otherwise, the features and function remain the same as has been explained above in connection with Fig. 1.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

### Part list

- 1: fuel supply system
- 10: tank
- 100: tank connection space
- 11: inlet line
- 11a: inlet line to gas space
- 11a1: valve
- 11b: inlet line to liquid space
- 11b1: valve
- 111: first valve
- 112: second valve
- 116: temperature sensor
- 12: outlet line
- 121, 122, 123, 124, 125, 126, 127, 128: valve
- 13: inert gas flush media line
- 130: source of inert gas
- 14: fuel gas flush media line
- 15: source of gaseous hydrogen
- 151: pressure build-up evaporator
- 152: main gas evaporator
- 153: fuel pump
- 8: gas consumer
- Tn: condensing temperature of inert gas
- B: bunkering station connection

## Claims

1. A fuel tank arrangement in a liquid hydrogen fuel supply system (1) for storing and providing hydrogen for a gas consumer (8), the system comprising:
- an inlet line (11) for providing fuel into a tank (10),
- the inlet line (11) having a first valve (111) in the first end and a second valve (112) in the tank end,
- the inlet line (11) is provided with an inert gas flush media line (13), the first end of which is connected to the inlet line (11) downstream of the first valve (111), and a second end of which is controllably connected to a source of inert gas (130) for performing an inert gas flushing of the inlet line (11),
**characterized in that** the system further comprises:
- the inlet line (11) being provided with a fuel gas flush media line (14), the first end of which is controllably connected to the inlet line (11) downstream of the first valve (111),
and a second end of which is connected to a source of gaseous hydrogen (15), for feeding gaseous hydrogen to the inlet line (11) for performing a first flushing of the inlet line (11).

2. The arrangement in a liquid hydrogen fuel supply system (1) according to claim 1, **characterized in that** the source of gaseous hydrogen (15) is a device for increasing pressure and temperature of gaseous hydrogen and it is connected to or supplied by gaseous or liquid hydrogen in the tank (10).

3. The arrangement in a liquid hydrogen fuel supply system (1) according to claim 1 or 2, **characterized in that** the source of gaseous hydrogen (15) is a main gas evaporator (152).

4. The arrangement in a liquid hydrogen fuel supply system (1) according to claim 1 or 2, **characterized in that** the source of gaseous hydrogen (15) is a pressure build-up evaporator (151).

5. The arrangement in a liquid hydrogen fuel supply system (1) according to any of the preceding claims, **characterized in that** the inlet line (11) is provided with a temperature sensor (116) for determining the temperature of the inlet line (11).

6. The arrangement in a liquid hydrogen fuel supply system (1) according to any of the preceding claims, **characterized in that** the fuel tank arrangement is provided with a tank connection space (100) for comparting connections to and from the tank (10).

7. The arrangement in a liquid hydrogen fuel supply system (1) according to any of the preceding claims, **characterized in that** the arrangement comprises a pressure increase device, being a pump, pressure accumulator or similar.

8. The arrangement in a liquid hydrogen fuel supply system (1) according to any of the preceding claims, **characterized in that** the inert gas is nitrogen.

9. A method in filling a liquid hydrogen fuel supply system (1) for storing and providing liquid hydrogen for a gas consumer (8), the method comprising steps of:
- feeding a predetermined amount of liquid hydrogen via an inlet line (11) from a bunkering station connection (B) to a tank 10, the inlet line (11) having a first valve (111) in the first end and a second valve (112) in the tank end, and after said feeding closing the first valve (111),
- inerting the inlet line (11) by supplying an inert gas via an inert gas flush media line (13) controllably connected to the inlet line (11) downstream of the first valve (111), the supplied inert gas flushing the hydrogen away from the inlet line (11) into the tank (10),
**characterized in that** the method further comprises:
- between the feeding step and the inerting step a fuel gas flushing step is performed wherein gaseous hydrogen being supplied from a source of gaseous hydrogen (15) to the inlet line (11) via a fuel gas flush media line (14) connected to the inlet line (11) downstream of the first valve (11), the gaseous hydrogen flushing the inlet line (11) and simultaneously warming up the inlet line (11).

10. A method in a liquid hydrogen fuel supply system (1) according to claim 9 or any of the preceding claims, **characterized in that** for the fuel gas flushing an amount of liquid hydrogen is evaporated to gas phase and warmed up to a predetermined temperature above Tn, wherein Tn is the condensing temperature of the inert gas.

11. A method in a liquid hydrogen fuel supply system (1) according to claim 9 or any of the preceding claims, **characterized in that** the temperature of the inlet line (11) is being monitored and after the temperature of the inlet line (11) is determined to be above Tn, the fuel gas flush media line (14) is closed and the flushing with the inert gas can be initiated.

12. A method in a liquid hydrogen fuel supply system (1) according to claim 9 or any of the preceding claims, **characterized in that** the completion of inert gas flush is determined by measuring the concentration of the inert gas in the tank end of the inlet line (11) .

13. A method in a liquid hydrogen fuel supply system (1) according to claim 9 or any of the preceding claims, **characterized in that** the source of gaseous hydrogen (15) is the tank (10), a main gas evaporator (152) or a pressure built-up evaporator (151) that evaporates an amount of hydrogen.

14. A method in a liquid hydrogen fuel supply system (1) according to claim 9 or any of the preceding claims, **characterized in that** the fuel gas flush pushes any remaining liquid hydrogen in the inlet line (11) to the tank (10) and evaporates possible small residuals of liquid hydrogen.

15. A method in a liquid hydrogen fuel supply system (1) according to any of the preceding claims, **characterized in that** the inert gas flush replaces the fuel gas in the inlet line (11) by pushing it to the tank (10).

## Patentansprüche

1. Brennstofftankanordnung in einem Flüssigwasserstoffbrennstoffversorgungssystem (1) zum Lagern und Bereitstellen von Wasserstoff für einen Gasverbraucher (8), wobei das System Folgendes umfasst:
- eine Einlassleitung (11) zum Bereitstellen von Brennstoff in einen Tank (10),
- wobei die Einlassleitung (11) ein erstes Ventil (111) in dem ersten Ende und ein zweites Ventil (112) in den Tankende aufweist,
- wobei die Einlassleitung (11) mit einer Spülmedienleitung (13) versehen ist, deren erstes Ende mit der Einlassleitung (11) stromabwärts des ersten Ventils (111) verbunden ist,
und wobei ein zweites Ende davon steuerbar mit einer Inertgasquelle (130) zum Durchführen eines Inertgasspülens der Einlassleitung (11) verbunden ist, **dadurch gekennzeichnet, dass** das System weiter Folgendes umfasst:
- Versorgen der Einlassleitung (11) mit einer Brennstoffgas-Spülmedienleitung (14), deren erstes Ende steuerbar mit der Einlassleitung (11) stromabwärts des ersten Ventils (111) verbunden ist,
und ein zweites Ende davon mit einer Quelle gasförmigen Wasserstoffs (15) zum Zuführen von gasförmigem Wasserstoff zu der Einlassleitung (11) zum Durchführen eines ersten Spülens der Einlassleitung (11) verbunden ist.

2. Anordnung in einem Flüssigwasserstoffbrennstoffversorgungssystem (1) nach Anspruch 1, **dadurch gekennzeichnet** das die Quelle gasförmigen Wasserstoffs (15) eine Vorrichtung zum Erhöhen von Druck und Temperatur von gasförmigem Wasserstoff ist und verbunden ist mit oder versorgt wird von dem gasförmigen oder flüssigen Wasserstoff in dem Tank (10).

3. Anordnung in einem Flüssigwasserstoffbrennstoffversorgungssystem (1) nach Anspruch 1 oder 2, **dadurch gekennzeichnet, dass** die Quelle gasförmigen Wasserstoffs (15) ein Hauptgasverdampfer (152) ist.

4. Anordnung in einem Flüssigwasserstoffbrennstoffversorgungssystem (1) nach Anspruch 1 oder 2, **dadurch gekennzeichnet, dass** die Quelle gasförmigen Wasserstoffs (15) ein Druckaufbauverdampfer (151) ist.

5. Anordnung in einem Flüssigwasserstoffbrennstoffversorgungssystem (1) nach einem der vorstehenden Ansprüche, **dadurch gekennzeichnet, dass** die Einlassleitung (11) mit einem Temperatursensor (116) zum Bestimmen der Temperatur der Einlassleitung (11) versehen ist.

6. Anordnung in einem Flüssigwasserstoffbrennstoffversorgungssystem (1) nach einem der vorstehenden Ansprüche, **dadurch gekennzeichnet, dass** die Brennstofftankanordnung mit einem Tankverbindungsraum (100) zum Herstellen von Verbindungen zu und von dem Tank (10) versehen ist.

7. Anordnung in einem Flüssigwasserstoffbrennstoffversorgungssystem (1) nach einem der vorstehenden Ansprüche, **dadurch gekennzeichnet, dass** die Anordnung eine Druckerhöhungsvorrichtung, die eine Pumpe, ein Druckspeicher oder Ähnliches ist, umfasst.

8. Anordnung in einem Flüssigwasserstoffbrennstoffversorgungssystem (1) nach einem der vorstehenden Ansprüche, **dadurch gekennzeichnet, dass** das Inertgas Stickstoff ist.

9. Verfahren beim Füllen eines Flüssigwasserstoffbrennstoffversorgungssystem (1) zum Lagern und Bereitstellen von flüssigem Wasserstoff für einen Gasverbraucher (8), wobei das Verfahren Folgendes umfasst:
- Zuführen einer vorbestimmten Menge an flüssigem Wasserstoff über eine Einlassleitung (11) von einer Bunkerstationsverbindung (B) zu einem Tank (10), wobei die Einlassleitung (11) ein erstes Ventil (111) in dem ersten Ende und ein zweites Ventil (112) in dem Tankende aufweist und nach dem Zuführen Schließen des ersten Ventils (111),
- Inertisieren der Einlassleitung (11) durch Zuführen eines Inertgases über eine Inertgasspülmedienleitung (13), die steuerbar mit der Einlassleitung (11) stromabwärts des ersten Ventils (111) verbunden ist, wobei das zugeführte Inertgas den Wasserstoff von der Einlassleitung (11) in den Tank (10) spült,
**dadurch gekennzeichnet, dass** das Verfahren weiter Folgendes umfasst:
- zwischen dem Zuführschritt und dem Inertisierungsschritt wird ein Brennstoffgasspülschritt durchgeführt, wobei gasförmige Wasserstoff von einer Quelle gasförmigen Wasserstoffs (15) zu der Einlassleitung (11) über eine Brennstoffgasspülmedienleitung (14) zugeführt wird, die mit der Einlassleitung (11) stromabwärts des ersten Ventils (11) verbunden ist, wobei der gasförmige Wasserstoff die Einlassleitung (11) spült und gleichzeitig die Einlassleitung (11) aufwärmt.

10. Verfahren in einem Flüssigwasserstoffbrennstoffversorgungssystem (1) nach Anspruch 9 oder einem der vorstehenden Ansprüche, **dadurch gekennzeichnet, dass** für das Brenngasspülen eine Menge an flüssigem Wasserstoff in Gasphase verdampft und auf eine vorbestimmte Temperatur über Tn erwärmt wird, wobei Tn die Kondensationstemperatur von Inertgas ist.

11. Verfahren in einem Flüssigwasserstoffbrennstoffversorgungssystem (1) nach Anspruch 9 oder einem der vorstehenden Ansprüche, **dadurch gekennzeichnet, dass** die Temperatur der Einlassleitung (11) überwacht wird, und nachdem bestimmt wurde, dass die Temperatur der Einlassleitung (11) über Tn liegt, die Brennstoffgasspülmittelleitung (14) geschlossen wird und das Spülen mit dem Inertgas eingeleitet werden kann.

12. Verfahren in einem Flüssigwasserstoffbrennstoffversorgungssystem (1) nach Anspruch 9 oder einem der vorstehenden Ansprüche, **dadurch gekennzeichnet, dass** das Abschließen des Inertgasspülens durch Messen der Konzentration des Inertgases in dem Tankende der Einlassleitung (11) bestimmt wird.

13. Verfahren in einem Flüssigwasserstoffbrennstoffversorgungssystem (1) nach Anspruch 9 oder einem der vorstehenden Ansprüche, **dadurch gekennzeichnet, dass** die Quelle gasförmigen Wasserstoffs (15) der Tank (10), ein Hauptgasverdampfer (152) oder ein Druckaufbauverdampfer (151), der eine Menge an Wasserstoff verdampft, ist.

14. Verfahren in einem Flüssigwasserstoffbrennstoffversorgungssystem (1) nach Anspruch 9 oder einem der vorstehenden Ansprüche, **dadurch gekennzeichnet, dass** das Brennstoffgasspülen jeden verbleibenden flüssigen Wasserstoff in der Einlassleitung (11) zu dem Tank (10) drückt und mögliche kleine Rückstände von flüssigem Wasserstoff verdampft.

15. Verfahren in einem Flüssigwasserstoffbrennstoffversorgungssystem (1) nach einem der vorstehenden Ansprüche, **dadurch gekennzeichnet, dass** das Inertgasspülen das Brennstoffgas in der Einlassleitung (11) ersetzt, indem es dieses zu dem Tank (10) drückt.

## Revendications

1. Dispositif de réservoir de carburant dans un système d'alimentation en carburant à hydrogène liquide (1) pour stocker et fournir de l'hydrogène à un consommateur de gaz (8), le système comprenant :
- une conduite d'admission (11) pour alimenter en carburant un réservoir (10)
- la conduite d'admission (11) ayant une première vanne (111) à la première extrémité et une deuxième vanne (112) à l'extrémité du réservoir,
- la conduite d'admission (11) est pourvue d'une conduite de fluide de rinçage au gaz inerte (13), dont la première extrémité est raccordée à la conduite d'admission (11) en aval de la première vanne (111) et dont une deuxième extrémité est raccordée de manière contrôlable à une source de gaz inerte (130) pour effectuer un rinçage au gaz inerte de la conduite d'admission (11), **caractérisé en ce que** le système comprend en outre
- la conduite d'admission (11) étant pourvue d'une conduite de fluide de rinçage au gaz combustible (14), dont la première extrémité est raccordée de manière contrôlable à la conduite d'admission (11) en aval de la première vanne (111) et dont une deuxième extrémité est raccordée à une source d'hydrogène gazeux (15) pour alimenter en hydrogène gazeux la conduite d'admission (11) pour effectuer un premier rinçage de la conduite d'admission (11).

2. Dispositif dans un système d'alimentation en carburant à hydrogène liquide (1) selon la revendication 1, **caractérisé en ce que** la source d'hydrogène gazeux (15) est un dispositif pour augmenter la pression et la température de l'hydrogène gazeux et elle est raccordée à ou alimentée par l'hydrogène gazeux ou liquide dans le réservoir (10).

3. Dispositif dans un système d'alimentation en carburant à hydrogène liquide (1) selon la revendication 1 ou 2, **caractérisé en ce que** la source d'hydrogène gazeux (15) est un évaporateur à gaz principal (152).

4. Dispositif dans un système d'alimentation en carburant à hydrogène liquide (1) selon la revendication 1 ou 2, **caractérisé en ce que** la source d'hydrogène gazeux (15) est un évaporateur à montée en pression (151).

5. Dispositif dans un système d'alimentation en hydrogène liquide (1) selon une quelconque des revendications précédentes, **caractérisé en ce que** la conduite d'admission (11) est munie d'un capteur de température (116) pour déterminer la température de la conduite d'admission (11).

6. Dispositif dans un système d'alimentation en hydrogène liquide (1) selon une quelconque des revendications précédentes, **caractérisé en ce que** le dispositif de réservoir de carburant est muni d'un espace de raccordement de réservoir (100) pour distribuer les raccordements vers et depuis le réservoir (10).

7. Dispositif dans un système d'alimentation en hydrogène liquide (1) selon une quelconque des revendications précédentes, **caractérisé en ce que** le dispositif comprend un dispositif d'augmentation de pression, qui est une pompe, un accumulateur de pression ou similaire.

8. Dispositif dans un système d'alimentation en hydrogène liquide (1) selon une quelconque des revendications précédentes, **caractérisé en ce que** le gaz inerte est de l'azote.

9. Procédé de remplissage d'un système d'alimentation en hydrogène liquide (1) pour stocker et fournir de l'hydrogène liquide à un consommateur de gaz (8), le procédé comprenant les étapes suivantes :
- alimenter un réservoir (10) par l'intermédiaire d'une conduite d'admission (11) à partir d'un raccordement de station de soutage (B), avec une quantité prédéterminée d'hydrogène liquide, la conduite d'admission (11) comportant une première vanne (111) à la première extrémité et une deuxième vanne (112) à l'extrémité du réservoir et après ladite alimentation, fermer la première vanne (111),
- inerter la conduite d'admission (11) en alimentant un gaz inerte par l'intermédiaire d'une conduite de fluide de rinçage au gaz inerte (13) raccordée de manière contrôlable à la conduite d'admission (11) en aval de la première vanne (111), le gaz inerte fourni rinçant l'hydrogène de la conduite d'admission (11) vers le réservoir (10),
**caractérisé en ce que** le procédé comprend en outre :
- entre l'étape d'alimentation et l'étape d'inertage, une étape de rinçage au gaz combustible est effectuée, dans laquelle l'hydrogène gazeux est alimenté à partir d'une source d'hydrogène gazeux (15) vers la conduite d'admission (11) via une conduite de fluide de rinçage au gaz combustible (14) raccordée à la conduite d'admission (11) en aval de la première vanne (11), l'hydrogène gazeux rinçant la conduite d'admission (11) et réchauffant simultanément la conduite d'admission (11).

10. Procédé dans un système d'alimentation en carburant à hydrogène liquide (1) selon la revendication 9 ou une quelconque des revendications précédentes, **caractérisé en ce que** pour le rinçage au gaz combustible, une quantité d'hydrogène liquide est évaporée en phase gazeuse et réchauffée à une température prédéterminée supérieure à Tn, dans lequel Tn est la température de condensation du gaz inerte.

11. Procédé dans un système d'alimentation en carburant à hydrogène liquide (1) selon la revendication 9 ou une quelconque des revendications précédentes, **caractérisé en ce que** la température de la conduite d'admission (11) est surveillée et après que la température de la conduite d'admission (11) est déterminée comme étant supérieure à Tn, la conduite de fluide de rinçage au gaz combustible (14) est fermée et le rinçage au gaz inerte peut être amorcé.

12. Procédé dans un système d'alimentation en carburant à hydrogène liquide (1) selon la revendication 9 ou une quelconque des revendications précédentes, **caractérisé en ce que** l'achèvement du rinçage au gaz inerte est déterminé en mesurant la concentration du gaz inerte dans l'extrémité de réservoir de la conduite d'admission (11).

13. Procédé dans un système d'alimentation en carburant à hydrogène liquide (1) selon la revendication 9 ou une quelconque des revendications précédentes, **caractérisé en ce que** la source d'hydrogène gazeux (15) est le réservoir (10), un évaporateur de gaz principal (152) ou un évaporateur à pression accumulée (151) qui évapore une quantité d'hydrogène.

14. Procédé dans un système d'alimentation en carburant à hydrogène liquide (1) selon la revendication 9 ou une quelconque des revendications précédentes, **caractérisé en ce que** le rinçage au gaz combustible pousse tout hydrogène liquide restant dans la conduite d'admission (11) vers le réservoir (10) et évapore les éventuels petits résidus d'hydrogène liquide.

15. Procédé dans un système d'alimentation en carburant à hydrogène liquide (1) selon une quelconque des revendications précédentes, **caractérisé en ce que** le rinçage au gaz inerte remplace le gaz combustible dans la conduite d'admission (11) en le poussant vers le réservoir (10).
